(19) **Europäisches Patentamt / European Patent Office / Office européen des brevets**

(11) **EP 1 766 997 B1**

(12) **FASCICULE DE BREVET EUROPEEN**

(45) Date de publication et mention
de la délivrance du brevet:
**25.03.2020 Bulletin 2020/13**

(21) Numéro de dépôt: **05783895.5**

(22) Date de dépôt: **28.06.2005**

(51) Int Cl.:
*H04N 19/63* (2014.01)     *H04N 19/132* (2014.01)
*H04N 19/154* (2014.01)     *H04N 19/615* (2014.01)

(86) Numéro de dépôt international:
**PCT/FR2005/001640**

(87) Numéro de publication internationale:
**WO 2006/016029 (16.02.2006 Gazette 2006/07)**

(54) **PROCÉDÉ ET DISPOSITIF DE CODAGE D'UNE SEQUENCE D'IMAGES VIDÉO EN COEFFICIENTS DE SOUS-BANDES DE FRÉQUENCES DE DIFFERENTES RESOLUTIONS SPATIALES**

VERFAHREN UND VORRICHTUNG ZUR KODIERUNG EINER VIDEOBILDSEQUENZ IN FREQUENZSUBBANDKOEFFIZIENTEN MIT VERSCHIEDENEN RÄUMLICHEN AUFLÖSUNGEN

METHOD AND DEVICE FOR ENCODING A VIDEO IMAGE SEQUENCE INTO FREQUENCY SUBBAND COEFFICIENTS OF DIFFERENT SPATIAL RESOLUTIONS

(84) Etats contractants désignés:
**AT BE BG CH CY CZ DE DK EE ES FI FR GB GR HU IE IS IT LI LT LU MC NL PL PT RO SE SI SK TR**

(30) Priorité: **13.07.2004 FR 0407836**

(43) Date de publication de la demande:
**28.03.2007 Bulletin 2007/13**

(73) Titulaire: **Orange**
**75015 Paris (FR)**

(72) Inventeurs:
• **PATEUX, Stéphane**
 **35760 Saint-Grégoire (FR)**
• **AMONOU, Isabelle**
 **35235 Thorigne Fouillard (FR)**
• **KERVADEC, Sylvain**
 **35490 Sens de Bretagne (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A-03/107683**

• **THAM J Y ET AL: "HIGHLY SCALABLE WAVELET-BASED VIDEO CODEC FOR VERY LOW BIT-RATE ENVIRONMENT" IEEE JOURNAL ON SELECTED AREAS IN COMMUNICATIONS, IEEE INC. NEW YORK, US, vol. 16, no. 1, 1998, pages 12-27, XP000734808 ISSN: 0733-8716**
• **PEARLMAN W A ET AL: "Embedded Video Subband Coding with 3D Spiht" WAVELET IMAGE AND VIDEO COMPRESSION, XX, XX, 1998, pages 397-432, XP002193121**
• **TAUBMAN D: "HIGH PERFORMANCE SCALABLE IMAGE COMPRESSION WITH EBCOT" IEEE TRANSACTIONS ON IMAGE PROCESSING, IEEE INC. NEW YORK, US, vol. 9, no. 7, juillet 2000 (2000-07), pages 1158-1170, XP000951990 ISSN: 1057-7149 cité dans la demande**

**Description**

La présente invention concerne un procédé et un dispositif de codage d'une séquence d'images vidéo en coefficients de sous-bandes de fréquence de différentes résolutions spatiales.

L'invention concerne aussi le procédé et le dispositif de décodage associés.

Plus précisément, la présente invention se situe dans le domaine du codage d'une séquence d'images numériques utilisant une compensation de mouvement et des transformées temporelles par transformation en ondelettes discrète.

Certains algorithmes dans le domaine du codage d'une séquence d'images numériques proposent des solutions pour associer des points entre deux images,

Ces algorithmes utilisent le filtrage temporel compensé en mouvement par décomposition en ondelettes discrète. Ces algorithmes effectuent d'abord une transformée temporelle par ondelettes entre les images de la séquence d'images vidéo et décomposent ensuite spatialement les sous-bandes temporelles résultantes. Plus précisément, la séquence d'images vidéo est décomposée en deux groupes d'images, les images paires et les images impaires, un champ de mouvement est estimé entre chaque image paire et la ou aux images impaires les plus proches utilisées lors de la transformation temporelle par ondelettes. Les images paires et impaires sont compensées en mouvement les unes par rapport aux autres de manière itérative afin d'obtenir des sous-bandes temporelles. L'itération de ce processus de création de groupe et de compensation en mouvement peut être effectuée afin de générer différents niveaux de décomposition en ondelettes. Les images temporelles sont par la suite filtrées spatialement à l'aide de filtres d'analyse en ondelettes.

On aboutit à l'issue de la décomposition à un ensemble de sous-bandes spatio-temporelles. Le champ de mouvement et les sous-bandes spatio-temporelles sont enfin codés et transmis en niveaux de restitution correspondant aux niveaux de résolution ciblés.

Selon ces algorithmes, des étapes de quantification et de codage entropique sont effectuées à la suite de la décomposition. Les coefficients des sous-bandes de haute fréquence, temporelles ou spatiales, qui ne servent pas directement à la résolution du niveau de restitution demandé sont supprimés.

Le document "Highly Scalable Wavelet-based video codec for Very Low Bit-Rate Environment", Tham, Ranganath, Kassim, IEEE Journal on selected areas in communications, vol. 16, n°1, January 1998 divulgue un procédé de codage vidéo par décomposition en ondelettes spatio-temporelles.

Lorsque le mouvement entre les différentes images de la séquence d'images vidéo est un mouvement de type translation ou rotation, les coefficients de haute fréquence appartenant à une résolution plus élevée que celle du niveau de restitution peuvent être omis sans que des artéfacts apparaissent lors de la reconstruction de la séquence d'images vidéo.

Lorsque le mouvement entre les différentes images de la séquence d'images vidéo est un mouvement de type expansif ou contractif, les inventeurs de la présente invention ont remarqué que la suppression des coefficients de haute fréquence appartenant à une résolution plus élevée que celle du niveau de restitution crée des artéfacts lors de la reconstruction de la séquence d'image.

L'invention a pour but de résoudre les inconvénients de l'art antérieur en proposant un procédé et un dispositif de codage et de décodage d'une séquence d'images vidéo qui améliorent la reconstruction de séquence d'images vidéo et cela lorsque des mouvements contractifs ou expansifs existent entre les images de la séquence d'images vidéo.

A cette fin, selon un premier aspect, l'invention propose un procédé de codage d'une séquence d'images vidéo en coefficients de sous-bandes de fréquence de différentes résolutions spatiales, le procédé de codage formant au moins un flux de données constitué d'au moins un niveau de restitution comprenant des coefficients de sous-bandes de fréquence dont la résolution spatiale est égale à une résolution spatiale du niveau de restitution, caractérisé en ce que le procédé comporte l'étape d'insertion dans au moins un niveau de restitution, de coefficients de sous-bandes de fréquence de résolution spatiale supérieure à la ou aux résolutions spatiales du niveau de restitution.

Corrélativement, l'invention concerne un dispositif de codage d'une séquence d'images vidéo en coefficients de sous-bandes de fréquence de différentes résolutions spatiales, le dispositif de codage formant au moins un flux de données constitué d'au moins un niveau de restitution comprenant des coefficients de sous-bandes de fréquence dont la résolution spatiale est égale à une résolution spatiale du niveau de restitution, caractérisé en ce que le dispositif comporte des moyens d'insertion dans au moins un niveau de restitution, de coefficients de sous-bandes de fréquence de résolution spatiale supérieure à la ou aux résolutions spatiales du niveau de restitution.

Ainsi, la reconstruction de séquence d'images vidéo est améliorée et cela même lorsque des mouvements contractifs ou expansifs existent entre les images de la séquence d'images vidéo.

Selon un autre aspect de l'invention, préalablement à l'insertion dans un niveau de restitution, de coefficients de sous-bandes de fréquence de résolution supérieure à la ou aux résolutions spatiales du niveau de restitution, on obtient une résolution spatiale effective pour chaque coefficient de sous-bande de fréquence, on compare chaque résolution spatiale effective avec la ou aux résolutions spatiales du niveau de restitution et les coefficients de sous-bandes de fréquence insérés dans le niveau de restitution sont des coefficients dont la résolution spatiale effective est inférieure à la ou aux résolutions spatiales du niveau de restitution.

Ainsi, il est possible de déterminer, à partir de la résolution spatiale effective, les coefficients qui doivent être insérés et donc de réduire la quantité de données transmise ou mémorisée.

Selon un autre aspect de l'invention, on obtient la résolution spatiale effective d'un coefficient en déterminant une pseudo résolution pour chaque coefficient de sous-bande de fréquence et en divisant la résolution spatiale de la sous-bande à laquelle appartient un coefficient par la pseudo résolution du coefficient.

Ainsi, la contribution effective du coefficient, pour le niveau de résolution, est correctement estimée.

Selon un autre aspect de l'invention, on détermine pour chaque coefficient, la pseudo résolution en estimant un champ de mouvement entre chaque image et au moins une image voisine de l'image de la séquence d'images vidéo, en déterminant, pour chaque bloc de chaque image de la séquence d'images vidéo, au moins un facteur d'expansion entre le bloc de l'image et le bloc correspondant dans au moins une image voisine, on met la pseudo résolution d'un bloc à la valeur un si le facteur d'expansion du bloc est égal à un ou on met la pseudo résolution d'un bloc à la valeur maximale des valeurs suivantes: la valeur un, la valeur du facteur d'expansion entre le bloc de l'image et le bloc correspondant dans au moins une image voisine.

Selon un autre aspect de l'invention, on détermine le facteur d'expansion d'un bloc en associant le bloc à une pluralité de triangles, en déterminant pour chaque triangle, une transformation affine entre les sommets du triangle dans le bloc et les sommets du triangle correspondant dans l'image voisine, en déterminant, pour chaque triangle, le facteur d'expansion du triangle en calculant le déterminant de la transformation affine du triangle et en déterminant le facteur d'expansion du bloc à partir des facteurs d'expansion des triangles associés au bloc.

Ainsi, il est possible de détecter simplement des mouvements expansifs ou contractifs et de prendre ceux-ci en compte.

Selon un autre aspect de l'invention, le codage de la séquence d'images vidéo en coefficients de sous-bandes de différentes résolutions spatiales est effectué par filtrage temporel et décomposition en ondelettes discrète et le flux de données est un flux de données échelonnables constitué d'une pluralité de niveaux de restitution.

Ainsi, il est possible de transmettre de manière échelonnée la séquence d'images vidéo codée.

Selon un autre aspect de l'invention, la séquence d'images vidéo a préalablement été codée dans un ensemble de données comprenant les coefficients des sous-bandes de fréquence de différentes résolutions spatiales et on forme une pluralité de flux de données constitués d'un niveau de restitution et comprenant des coefficients de sous-bandes de fréquence dont la résolution spatiale est égale à une résolution spatiale du niveau de restitution ainsi que des coefficients de sous-bandes de fréquence de résolution spatiale supérieure à la ou aux résolutions spatiales du niveau de restitution.

Ainsi, il est possible d'effectuer un transcodage d'une séquence d'image vidéo codée et de fournir à des clients un flux de données adapté à leurs besoins.

Selon un autre aspect de l'invention, on insère dans le flux de données, la résolution spatiale de chaque coefficient de sous-bande de fréquence inséré dans un niveau de restitution.

L'invention concerne aussi un procédé de décodage d'un flux de données obtenu par filtrage temporel et décomposition en ondelettes discrète, le flux de données étant constitué d'au moins un niveau de restitution comprenant des coefficients de sous-bandes de fréquence dont la résolution spatiale est égale à une résolution spatiale du niveau de restitution, caractérisé en ce que le procédé comporte les étapes de :

- d'obtention, dans au moins un niveau de restitution, de coefficients de sous-bandes de fréquence de résolution spatiale supérieure à la ou aux résolutions spatiales du niveau de restitution,
- synthèse des coefficients de sous-bandes de fréquence dont la résolution spatiale est égale à une résolution spatiale du niveau de restitution et des coefficients de sous-bandes de fréquence de résolution spatiale supérieure à la ou aux résolutions spatiales du niveau de restitution.

Corrélativement, l'invention concerne un dispositif de décodage d'un flux de données obtenu par filtrage temporel et décomposition en ondelettes discrète, le flux de données étant constitué d'au moins un niveau de restitution comprenant des coefficients de sous-bandes de fréquence dont la résolution spatiale est égale à une résolution spatiale du niveau de restitution, caractérisé en ce que le dispositif comporte:

- des moyens d'obtention, dans au moins un niveau de restitution, de coefficients de sous-bandes de fréquence de résolution spatiale supérieure à la ou aux résolutions spatiales du niveau de restitution,
- des moyens de synthèse des coefficients de sous-bandes de fréquence dont la résolution spatiale est égale à une résolution spatiale du niveau de restitution et des coefficients de sous-bandes de fréquence de résolution spatiale supérieure à la ou aux résolutions spatiales du niveau de restitution.

Selon un autre aspect de l'invention, préalablement à la synthèse des coefficients de sous-bandes de fréquence de résolution supérieure à la ou aux résolutions spatiales du niveau de restitution, on obtient une résolution spatiale effective pour chaque coefficient de sous-bande de fréquence, on compare chaque résolution spatiale effective avec la ou aux résolutions spatiales du niveau de restitution, et les coefficients de sous-bande de fréquence synthétisés sont les coefficients dont la résolution spatiale effective est inférieure à la ou aux résolutions spatiales du niveau de restitution.

Ainsi, les artéfacts liés aux mouvements contractifs ou expansifs sont réduits.

Selon un autre aspect de l'invention, la résolution spatiale effective de chaque coefficient de sous-bande de fréquence est obtenue en lisant celle-ci dans le flux de données.

Ainsi, le décodeur n'a pas besoin de calculer la résolution spatiale effective.

L'invention concerne aussi un signal comprenant une séquence d'images vidéo codée en coefficients de sous-bandes de fréquence de différentes résolutions spatiales, le signal formant au moins un flux de données constitué d'au moins un niveau de restitution comprenant des coefficients de sous-bandes de fréquence dont la résolution spatiale est égale à une résolution spatiale du niveau de restitution, caractérisé en ce que le signal comporte dans au moins un niveau de restitution, des coefficients de sous-bandes de fréquence de résolution spatiale supérieure à la ou aux résolutions spatiales du niveau de restitution.

L'invention concerne aussi un procédé de stockage ou un procédé de transmission d'un signal comprenant une séquence d'images vidéo codée en coefficients de sous-bandes de fréquence de différentes résolutions spatiales, le signal formant au moins un flux de données constitué d'au moins un niveau de restitution comprenant des coefficients de sous-bandes de fréquence dont la résolution spatiale est égale à une résolution spatiale du niveau de restitution, et dans lequel le signal comporte dans au moins un niveau de restitution, des coefficients de sous-bandes de fréquence de résolution spatiale supérieure à la ou aux résolutions spatiales du niveau de restitution.

Les avantages du procédé et du dispositif de décodage étant identiques aux avantages du procédé et du dispositif de codage, ceux-ci ne seront pas rappelés.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 représente un schéma bloc d'un codeur vidéo à filtrage temporel compensé en mouvement et décomposition en ondelettes discrète selon l'invention ;

la Fig. 2 représente un schéma bloc d'un dispositif informatique et/ou de télécommunication apte à exécuter les algorithmes de codage et de décodage conformément aux algorithmes décrits en référence aux Figs. 3 et 8;

la Fig. 3 représente l'algorithme de sélection adaptée de coefficients obtenus par décomposition en ondelettes discrète selon l'invention ;

la Fig. 4 représente un exemple d'images obtenues par filtrage temporel compensé en mouvement et décomposition en ondelettes discrète selon l'invention ;

les Figs. 5a et 5b représentent l'association d'un bloc d'une image à une pluralité de triangles;

la Fig. 6 est une représentation d'une sous-bande temporelle décomposée en sous-bandes spatiales et dans lesquelles différentes résolutions spatiales effectives sont déterminées selon l'invention ;

la Fig. 7 représente un schéma bloc d'un décodeur vidéo à filtrage temporel compensé en mouvement et décomposition en ondelettes discrète selon l'invention ;

la Fig. 8 représente l'algorithme de décodage d'un flux de données codées selon l'invention.

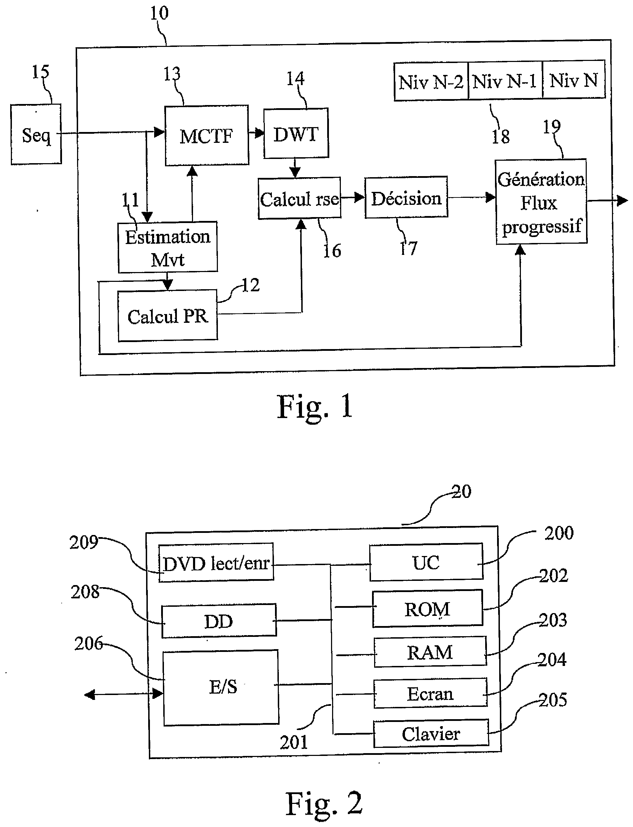

La Fig. 1 représente un schéma bloc d'un codeur vidéo à filtrage temporel compensé en mouvement et décomposition en ondelettes discrète selon l'invention.

Le codeur vidéo à filtrage temporel compensé en mouvement et décomposition en ondelettes discrète 10 est apte à coder une séquence d'images vidéo 15 en un flux de données échelonnables 18. Un flux de données échelonnables est un flux dans lequel les données sont agencées de telle manière qu'il est possible de transmettre une représentation, en résolution et/ou en qualité de l'image, variable selon le type d'application recevant les données. Les données comprises dans ce flux de données échelonnables sont codées de manière à assurer la transmission de séquences d'images vidéo de manière échelonnée ou "scalable" en terminologie anglo-saxonne tant en qualité qu'en résolution et cela sans avoir à effectuer différents codages de la séquence d'images vidéo. Il est ainsi possible de ne stocker sur un support de données et/ou de ne transmettre qu'une partie du flux de données échelonnables 18 correspondant à un niveau de restitution vers un terminal de télécommunication lorsque le débit du réseau de télécommunication est faible et/ou lorsque le terminal de télécommunication n'a pas besoin d'une qualité et/ou d'une résolution importante. Il est aussi possible de stocker sur un support de données et/ou de transmettre la totalité du flux de données échelonnables 18 vers un terminal de télécommunication lorsque le débit du réseau de télécommunication est important et lorsque le terminal de télécommunication requiert une qualité et/ou une résolution importante et cela à partir du même flux de données échelonnables 18.

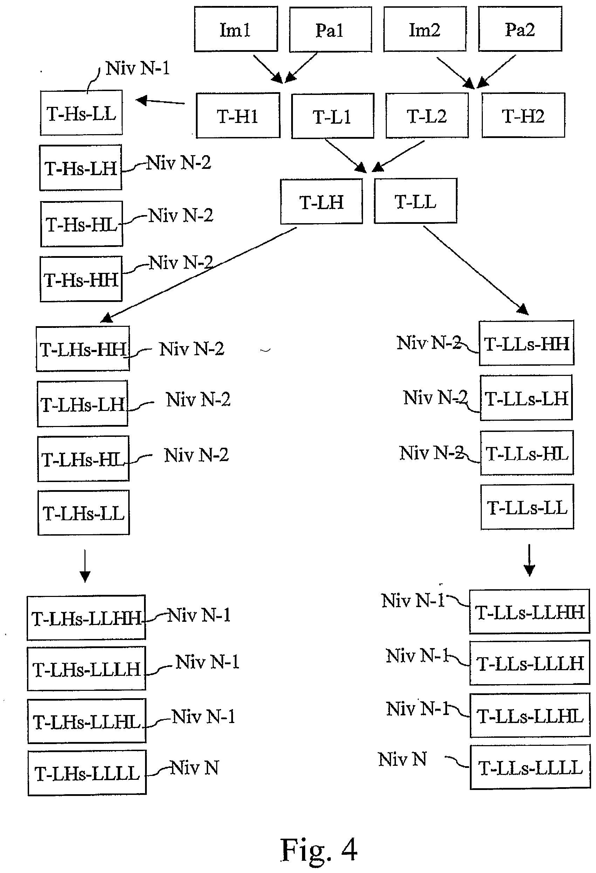

Selon l'invention, le codeur 10 vidéo comprend un module de filtrage temporel compensé en mouvement 13. Le module de filtrage temporel compensé en mouvement 13 transforme un groupe de N images en deux groupes d'images, par exemple un groupe de (N+1)/2 images de basse fréquence et un groupe de N/2 images de haute fréquence, et transforme ces images à partir d'une estimation de mouvement effectuée par un module d'estimation de mouvement 11 du codeur vidéo 10. En Fig. 4, est représentée une séquence d'images vidéo constituée des images Im1, Pa1, Im2 et Pa2. Cette séquence d'images vidéo est divisée en un groupe d'images impaires comprenant les images Im1 et Im2 et un groupe d'images paires comprenant les images Pa1 et Pa2.

Le module d'estimation de mouvement 11 effectue une estimation de mouvement entre chaque image impaire et les images voisines de la séquence d'images vidéo. Le module de filtrage temporel compensé en mouvement 13 compense en mouvement l'image paire pour que le filtrage temporel soit le plus efficace possible. En effet, plus la différence entre une prédiction d'une image et l'image est faible, plus elle pourra être compressée de manière efficace, c'est-à-dire avec un bon compromis débit/distorsion, ou de manière équivalente, un bon rapport taux de compression sur qualité de reconstruction.

Il est à remarquer ici qu'en variante, lorsque des filtres de Haar sont utilisés pour la décomposition en ondclcttcs discrète, l'estimation de mouvement est effectuée selon une seule direction entre l'image et une image voisine.

Le module d'estimation de mouvement 11 calcule, pour chaque image, un champ de mouvement entre une image et les images voisines, par exemple et de manière non limitative, par une mise en correspondance de blocs d'une image impaire vers les images paires. Cette technique est connue sous le terme anglo-saxon de "block matching". Bien entendu, d'autres techniques peuvent être utilisées telles que par exemple la technique d'estimation de mouvement par maillage. Dans le cas particulier d'une estimation par blocs, la valeur du mouvement du bloc peut être affectée à chaque pixel du bloc d'une image. En variante, le vecteur mouvement pondéré du bloc ainsi que les vecteurs mouvement pondérés des blocs voisins sont affectés à chaque pixel du bloc selon la technique connue sous la dénomination OBMC (Overlapped Block Motion Compensation),

Le module de filtrage temporel compensé en mouvement 13 effectue une décomposition en ondelettes discrète entre les images pour décomposer la séquence d'images vidéo en plusieurs sous-bandes temporelles, réparties sur un ou plusieurs niveaux de résolution. La décomposition en ondelettes discrète est appliquée récursivement sur les sous-bandes temporelles basses des sous-bandes temporelles tant que le niveau de décomposition souhaité n'est pas atteint. Ainsi, selon l'exemple de la Fig. 4 et dans le cas d'une utilisation de filtres de Haar, les images Im1 et Pa1 sont décomposées pour former une sous-bande temporelle basse notée T-L1 et une sous-bande temporelle haute notée T-H1. De même, les images Im2 et Pa2 sont décomposées pour former une sous-bande temporelle basse notée T-L2 et une sous-bande temporelle haute notée T-H2. Une seconde décomposition en ondelettes discrète est appliquée sur les sous-bandes temporelles T-L1 et T-L2 pour former une sous-bande temporelle basse notée T-LL et une sous-bande temporelle haute notée T-LH.

Les différentes sous-bandes temporelles obtenues par le module de filtrage temporel compensé en mouvement 13 sont transférées à un module de décomposition en ondelettes discrète 14 qui effectue une décomposition spatiale de ces sous-bandes temporelles. Ainsi, selon l'exemple de la Fig. 4, la sous-bande temporelle T-H1 est décomposée en une sous-bande de basse fréquence T-Hs-LL et trois sous-bandes de haute fréquence T-Hs-LH, T-Hs-HL T-Hs-HH. La sous-bande temporelle T-LH est décomposée en une sous-bande de basse fréquence T-LHs-LL et trois sous-bandes de haute fréquence T-LHs-LH, T-LHs-HL T-LHs-HH et la sous-bande de fréquence T-LHs-LL est décomposée une nouvelle fois en une sous-bande de basse fréquence T-LHs-LLLL et trois sous-bandes de haute fréquence T-LHs-LLLH, T-LHs-LLHL T-LHs-LLHH. La sous-bande temporelle T-LL est décomposée en une sous-bande de basse fréquence T-LLs-LL et trois sous-bandes de haute fréquence T-LLs-LH, T-LLs-HL T-LLs-HH et la sous-bande de fréquence T-LLs-LL est décomposée une nouvelle fois en une sous-bande de basse fréquence T-LLs-LLLL et trois sous-bandes de haute fréquence T-LLs-LLLH, T-LLs-LLHL T-LLs-LLHH.

La sous-bande temporelle T-H2 est décomposée en une sous-bande de basse fréquence T-H's-LL et trois sous-bandes de haute fréquence T-H's-LH, T-H's-HL T-H's-HH. Ces sous-bandes ne sont pas représentées en Fig. 1.

La sous-bande T-Hs-LL est décomposée une nouvelle fois en une sous-bande de basse fréquence T-Hs-LLLL et trois sous-bandes de haute fréquence T-Hs-LLLH, T-Hs-LLHL et T-Hs-LLHH. Ces sous-bandes ne sont pas représentées en Fig. 1.

La sous-bande T-H's-LL est décomposée une nouvelle fois en une sous-bande de basse fréquence T-H's-LLLL et trois sous-bandes de haute fréquence T-H's-LLLH, T-H's-LLHL et T-H's-LLHH. Ces sous-bandes ne sont pas représentées en Fig. 1.

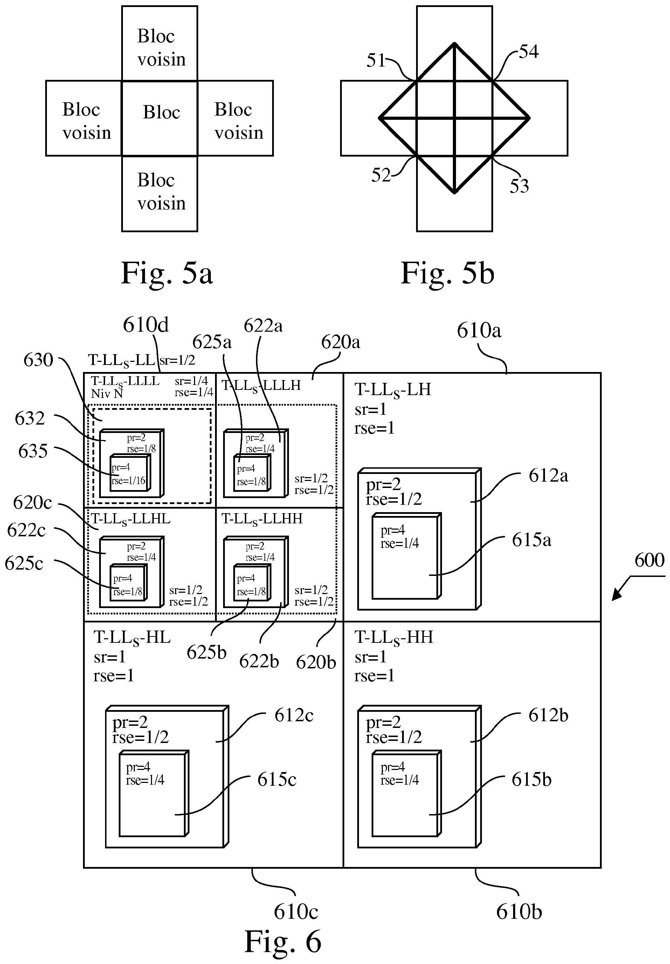

Le codeur vidéo 10 comporte aussi un module de calcul de pseudo résolution 12. Le module de calcul de pseudo résolution 12 associe chaque bloc d'une image ayant été défini par le module de prédiction de mouvement 11 à quatre triangles. A partir d'un bloc tel que représenté en Fig. 5a et de ses blocs voisins, le module de calcul de pseudo résolution 12 forme quatre triangles notés 51, 52, 53 et 54 en Fig. 5b.

A partir du vecteur de mouvement déterminé par le module d'estimation de champ de mouvement 11 et associé au bloc ayant été associé aux triangles, le module de calcul de pseudo résolution 12 détermine un facteur d'expansion pour chaque triangle. Le facteur

d'expansion $\rho_t$ d'un triangle est obtenu en représentant le mouvement du triangle entre deux images voisines par une transformation affine appliquée à un triangle d'une image pour obtenir une projection du triangle dans l'image voisine. Une transformation affine peut représenter les mouvements qui sont susceptibles d'apparaître entre deux images que sont les translations, les rotations, les changements d'échelle.

La transformation affine est ici représentée sous la forme d'une matrice 3*3 et permet d'obtenir les coordonnées (x',y') de chaque sommet du triangle dans l'image voisine à partir des coordonnées (x,y) du sommet dans l'image selon la formule:

$$\begin{pmatrix} x' \\ y' \\ 1 \end{pmatrix} = \begin{pmatrix} m00 & m01 & m02 \\ m10 & m11 & m12 \\ 0 & 0 & 1 \end{pmatrix} \begin{pmatrix} x \\ y \\ 1 \end{pmatrix}$$

Le facteur d'expansion $\rho_t$ d'un triangle est obtenu en calculant le déterminant de la matrice:

$$\rho_t = \left( \det \begin{bmatrix} m00 & m01 \\ m10 & m11 \end{bmatrix} \right)^{1/2}$$

Le facteur d'expansion $\rho$ du bloc est ensuite déterminé par le module de calcul de pseudo résolution 12 à partir des facteurs d'expansion des triangles associés au bloc. Le facteur d'expansion $\rho$ du bloc est par exemple déterminé en calculant la moyenne des facteurs d'expansion $\rho_t$ des triangles ou en variante en affectant au facteur d'expansion $\rho$ la valeur maximale des facteurs d'expansion $\rho_t$ des triangles. Il est à remarquer aussi que dans une autre variante, à chaque pixel du bloc peut être associé un facteur d'expansion déterminé en fonction des valeurs des facteurs d'expansion $\rho_t$ pondérés respectivement par l'inverse de la distance séparant le pixel de chaque triangle associé au bloc.

Le module de calcul de pseudo résolution 12 effectue ces opérations pour chaque bloc de l'image et pour chaque image de la séquence d'images vidéo 15.

Le facteur d'expansion $\rho$ déterminé, le module de calcul de pseudo résolution 12 détermine une pseudo résolution notée PR à partir de celui-ci, Si le facteur d'expansion $\rho$ est égal à un, le mouvement est considéré être une translation ou une rotation, la pseudo résolution PR est alors mise à la valeur un. Si le facteur d'expansion $\rho$ est différent de un, la pseudo résolution PR est égale à la valeur maximale des valeurs suivantes: le nombre un; la valeur du facteur d'expansion entre le bloc de l'image en cours de traitement et le bloc correspondant dans l'image précédente dans la séquence d'images vidéo 15; la valeur du facteur d'expansion entre le bloc de l'image en cours de traitement et le bloc correspondant dans l'image suivante dans la séquence d'images vidéo 15.

Il est à remarquer ici, que lorsque par exemple des filtres de décomposition temporelle nécessitant un nombre plus important d'images sont utilisés par le module de filtrage temporel compensé en mouvement 13 ou lorsque la transformation temporelle est effectuée sur plusieurs niveaux de décomposition, la pseudo résolution peut être aussi composée sur le temps en prenant en compte le mouvement sur un voisinage temporel plus important.

Il est aussi à remarquer ici que, lorsque par exemple des filtres de décomposition temporelle de Haar sont utilisés par le module de filtrage temporel compensé en mouvement 13, la pseudo résolution PR est égale à la valeur maximale des valeurs suivantes: le nombre un; la valeur du facteur d'expansion entre le bloc de l'image en cours de traitement et le bloc correspondant dans l'image précédente dans la séquence d'images vidéo 15.

Le module de calcul de pseudo résolution 12 détermine une pseudo résolution PR pour chaque bloc de chaque image de la séquence d'images vidéo 15.

Le codeur vidéo à filtrage temporel compensé en mouvement et décomposition en ondelettes discrète 10 comporte aussi un module de calcul de résolution spatiale effective 16. Le module de calcul de résolution spatiale effective 16 détermine, pour chaque coefficient noté c de chaque sous-bande spatiale décomposée par le module de décomposition en ondelettes discrète 14, une résolution spatiale effective notée rsc(c). Le module de calcul de résolution spatiale effective 16 associe à chaque coefficient c la pseudo résolution du bloc correspondant spatialement aux coordonnées spatiales du coefficient. Cette pseudo résolution est notée pr(c).

Une résolution spatiale effective d'un coefficient est déterminée en divisant la résolution spatiale pr(c) du coefficient c par la pseudo résolution associée au coefficient c. Cette résolution spatiale effective est notée rse(c).

Nous entendons par résolution spatiale d'un coefficient, la résolution spatiale de la sous-bande de fréquence à laquelle il appartient. Ainsi selon l'exemple de la Fig. 4, les coefficients des sous-bandes T-Hs-LH, T-Hs-HL, T-Hs-HH, T-LHs-HH, T-LHs-LH, T-LHs-HL, T-LLs-HH, T-LLs-LH et T-LLs-HL ont une résolution spatiale de un. Les coefficients des sous-bandes T-Hs-LL, T-LHs-LL re-décomposéé par la suite, T-LLs-LL re-décomposée par la suite, T-LHs-LLHH, T-LHs-LLLH, T-LHs-LLHL, T-LLs-LLHH, T-LLs-LLLH et T-LLs-LLHL ont une résolution spatiale de un demi. Les coefficients des sous-bandes T-LHs-LLLL et T-LLs-LLLL ont une résolution spatiale de un quart. La détermination de la résolution spatiale effective pour chaque coefficient d'une sous-bande de décomposition est explicitée plus en détail en référence à la Fig. 6.

La Fig. 6 est une représentation d'une sous-bande temporelle décomposée en sous-bandes spatiales et dans lesquelles différentes résolutions spatiales effectives sont déterminées selon l'invention

La sous-bande temporelle 600 de la Fig. 6 est par exemple la sous-bande temporelle T-LL de la Fig. 4. La sous-bande temporelle 600 est décomposée en une sous-bande T-LLs-LH 610a de résolution spatiale un, une sous-bande T-LLs-HH 610b de résolution spatiale un, une sous-bande T-LLs-HL 610c de résolution spatiale un et une sous-bande T-LLs-LL 610d de résolution spatiale un demi. La sous-bande T-LLs-LL 610d est décomposée en une sous-bande T-LLs-LLLH 620a de résolution spatiale un demi, une sous-bande T-LLs-LLHH 620b de résolution spatiale un demi, une sous-bande T-LLs-LLHL 620c de résolution spatiale un demi et une sous-bande T-LLs-LLLL 630 de résolution spatiale un quart.

Les zones 612, 622 et 632 de la sous-bande temporelle 600 correspondent à une zone d'une image correspondante de la sous-bande temporelle 600 pour laquelle le module de détermination de pseudo résolution 12 a déterminé une pseudo résolution de deux. Les zones 615, 625 et 635 de la sous-bande temporelle 600 correspondent à une zone d'une image correspondante de la sous-bande temporelle 600 pour laquelle le module de détermination de pseudo résolution 12 a déterminé une pseudo résolution de quatre,

La résolution spatiale effective des coefficients compris dans les zones 612a, 612b et 612c est égale à un demi, la résolution spatiale effective des coefficients compris dans les zones 615a, 615b et 615c est égale à un quart, la résolution spatiale effective des coefficients compris dans les zones 622a, 622b et 622c est égale à un quart, la résolution spatiale effective des coefficients compris dans les zones 625a, 625b et 625c est égale à un huitième, la résolution spatiale effective des coefficients compris dans la zone 632 est égale à un huitième et la résolution spatiale effective des coefficients compris dans la zone 635 est égale à un seizième.

Les coefficients compris dans les sous-bandes 610a, 610b, 610c, à l'exception des coefficients compris dans les zones 612 et 615, ont une résolution spatiale effective de un correspondant à leur résolution spatiale.

Les coefficients compris dans les sous-bandes 620a, 620b, 620c, à l'exception des coefficients compris dans les zones 622 et 655, ont une résolution spatiale effective de un demi correspondant à leur résolution spatiale.

Les coefficients compris dans la sous-bande 630, à l'exception des coefficients compris dans les zones 632 et 635, ont une résolution spatiale effective de un quart correspondant à leur résolution spatiale.

Le codeur vidéo à filtrage temporel compensé en mouvement et décomposition en ondelettes discrète 10 comporte aussi un module de décision 17. Le module de décision 17, à partir de la résolution spatiale effective calculée pour chaque coefficient et de la résolution de restitution cible pour laquelle le flux de données échelonnables 18 est formé par le module de génération de flux progressif 19, détermine quels coefficients de haute fréquence doivent être insérés dans le flux de données échelonnables 18 pour le niveau de restitution ou niveau de résolution en cours de traitement.

Classiquement, selon l'exemple de la Fig. 4, le flux de données échelonnables 18 est constitué de trois niveaux de résolution. Le premier niveau de restitution noté Niv N comprend les sous-bandes de basse fréquence T-LLs-LLLL, T-LHs-LLLL, T-Hs-LLLL et T-H's-LLLL. Ce niveau de restitution correspond à la plus basse résolution de restitution de la séquence d'images vidéo 18, en l'occurrence la résolution de restitution un quart. Le second niveau de restitution noté Niv N-1 comprend les sous-bandes de haute fréquence T-Hs-LLHL, T-Hs-LLLH, T-Hs-LLHH, T-H's-LLHL, T-H's-LLLH, T-H's-LLHH, et les sous-bandes de haute fréquence T-LHs-LLLH, T-LHs-LLHL T-LHs-LLHH, T-LLs-LLLH, T-LLs-LLHL et T-LLs-LLHH. Ce niveau de restitution correspond à une résolution intermédiaire de la séquence d'images vidéo 18, en l'occurrence la résolution un demi. Le troisième niveau de restitution noté Niv N-2 comprend toutes les autres sous-bandes de la Fig. 4 indicées par la référence Niv N-2. Ce niveau de restitution correspond à une résolution maximale de la séquence d'images vidéo 18, en l'occurrence la résolution un.

Selon l'invention, le module de décision 17 insère, dans un niveau de restitution, les coefficients de haute fréquence d'autres sous-bandes de haute fréquence que celles classiquement comprises dans le niveau de résolution spatiale du niveau de restitution. Pour cela, le module de décision 17 compare, pour chaque coefficient de chaque sous-bande, la résolution spatiale effective du coefficient avec la résolution spatiale du niveau de restitution. Si la résolution spatiale effective du coefficient est supérieure à la résolution spatiale du niveau de restitution, le coefficient n'est pas inclus dans le niveau de restitution. Si, au contraire, la résolution spatiale effective du coefficient est inférieure ou égale à la résolution spatiale du niveau de restitution, le coefficient est inclus dans le niveau de restitution s'il n'a pas été précédemment inclus dans un niveau de restitution.

Ainsi, selon l'exemple de la Fig. 6, lorsque le niveau de restitution est le niveau N, soit de résolution un quart, les coefficients compris dans les zones notées 622a, 622b, 622c, 625a, 625b, 625c, 615a, 615b et 615c sont insérés dans le flux de données échelonnables 18 à ce niveau de restitution en plus des coefficients de la sous-bande de fréquence notée Niv N en Fig. 4.

Lorsque le niveau de restitution est le niveau N-1, soit de résolution un demi, les coefficients compris dans les zones notées 612a, 612b, 612c sont insérés dans le flux de données échelonnables à ce niveau de restitution en plus des coefficients des sous-bandes de fréquence notées Niv N-1 en Fig. 4. IL est remarquer ici que les coefficients compris dans les zones notées 615a, 615b et 615c ne sont pas insérés à cc niveau de restitution car ils ont été à un niveau de restitution précédent.

Le module de décision 17 transfère les différentes sous-bandes de décomposition nécessaires à la formation d'un niveau de restitution souhaité ainsi que les coefficients déterminés comme devant être inclus dans le niveau de restitution souhaité au module de génération de flux progressif 19.

Le module de génération de flux progressif 19 forme un flux de données échelonnables 18 à partir des données reçues du module de décision 17 et des champs de mouvement transférés par le module d'estimation 11.

Dans une variante de réalisation, le module de génération de flux progressif 19 insère dans le flux de données échelonnables la résolution spatiale effective de chaque coefficient déterminé comme devant être inclus dans un niveau de restitution.

Le module de génération de flux progressif 19 encode le flux de données échelonnables 18 en utilisant un algorithme d'optimisation débit-distorsion tel que celui utilisé dans le codeur tel que décrit dans le document "High Performance Scalability Image Compression with EBCOT" IEEE transactions on image proccssing, Vol 9, No 7, July 2000 de David Taubman.

Classiquement, un tel codeur modifie la quantification d'un groupe de coefficients de manière à minimiser le débit sous contrainte d'une distorsion maximale. Cette optimisation est traduite par la formule de Lagrange:

$$\min_{\{0s\}} R(\{\theta_s\}) + \lambda D(\{\theta_s\})$$

Dans laquelle R est le débit, D représente la distorsion et $\theta_s$ un jeu de paramètres de codage pour une sous-bande de fréquence.

Selon un aspect particulier de la présente invention, lors de l'optimisation débit-distorsion, la pseudo résolution de chaque coefficient est prise en compte. Le module de génération de flux progressif 19 encode le flux de données échelonnables 18 en effectuant une optimisation telle que :

$$\min_{\{\theta s\}} R(\{\theta_s\}) + f(c)\,\lambda D(\{\theta_s\})$$

dans laquelle f(c) est un facteur de pondération permettant de pondérer la distorsion du coefficient c. Plus le facteur de pondération f(c) a une valeur élevée, plus la distorsion sera atténuée sur le coefficient.

Préférentiellement, $f(c) = (pr(c))^2$ si la résolution spatiale effective du coefficient est inférieure ou égale à la résolution spatiale du niveau de restitution.

Dans une variante de réalisation, la sélection et le codage des coefficients sont fusionnés en posant f(c) = 0 si la résolution spatiale effective du coefficient est supérieure à la résolution spatiale du niveau de restitution.

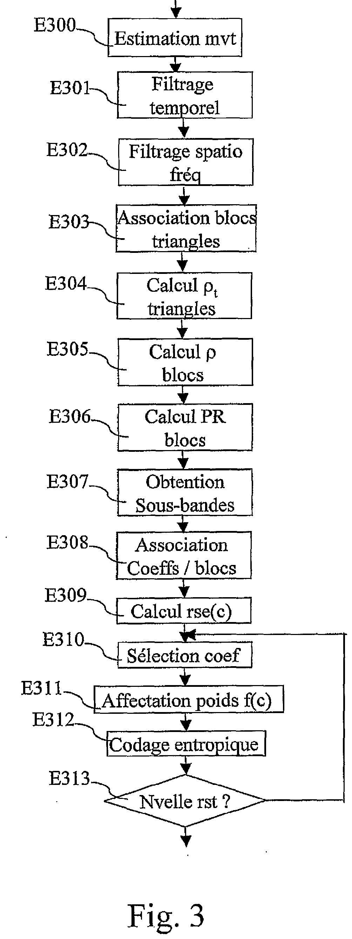

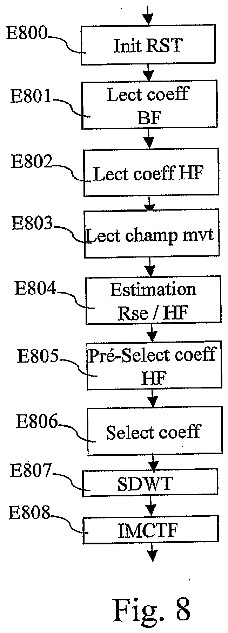

La Fig. 2 représente un schéma bloc d'un dispositif informatique et/ou de télécommunication apte à exécuter les algorithmes de codage et de décodage conformément aux algorithmes décrits en référence aux Figs. 3 et 8.

Ce dispositif informatique et/ou de télécommunication 20 est adapté à effectuer à partir d'un logiciel, un filtrage temporel compensé en mouvement sur une séquence d'images pour former des sous-bandes temporelles et à effectuer une décomposition spatiale des sous-bandes temporelles pour former des sous-bandes spatiales de haute et basse fréquences comportant des coefficients. Le dispositif 20 est apte à former un flux de données échelonnables dans lequel des coefficients de haute fréquence de sous-bandes spatiales sont insérés dans au moins un niveau de restitution de résolution différente de celle des sous-bandes de fréquence comprises classiquement dans le niveau de restitution.

Le dispositif 20 est aussi apte à effectuer, à partir d'un logiciel, un filtrage temporel compensé en mouvement inverse sur un flux de données échelonnables et à traiter des coefficients de haute fréquence compris dans un niveau de restitution dont les résolutions sont différentes de celles des sous-bandes de fréquence comprises dans le niveau de restitution pour former une séquence d'images vidéo. Le dispositif 20 est aussi apte à déterminer la résolution spatiale de chaque coefficient inclus dans le flux de données échelonnables 18.

Le dispositif 20 est en variante apte à détecter, pour certains coefficients de haute fréquence, dans le flux de données échelonnables 18, des informations représentatives d'une résolution spatiale effective de coefficients, pour former une séquence d'images vidéo 15 à partir de sous-bandes temporelles, de sous-bandes spatiales et des coefficients dont la résolution spatiale effective est incluse dans le flux de données échelonnables 18.

Le dispositif 20 est par exemple un micro-ordinateur. Il peut être aussi intégré dans un moyen de visualisation de séquence d'images vidéo tel qu'un téléviseur ou tout autre dispositif de génération d'ensemble d'informations à destination de terminaux récepteurs tels que des téléviseurs, des téléphones mobiles...

Le dispositif 20 comporte un bus de communication 201 auquel sont reliés une unité centrale 200, une mémoire morte 202, une mémoire vive 203, un écran 204, un clavier 205, un disque dur 208, un lecteur/enregistreur de disque vidéo numérique ou DVD 209, une interface de communication 206 avec un réseau de télécommunication.

Le disque dur 208 mémorise le programme mettant en oeuvre l'invention, ainsi que les données permettant le codage et/ou le décodage selon l'invention.

De manière plus générale, les programmes selon la présente invention sont mémorisés dans un moyen de stockage. Ce moyen de stockage est lisible par un ordinateur ou un microprocesseur 200. Ce moyen de stockage est intégré ou non au dispositif, et peut être amovible.

Lors de la mise sous tension du dispositif 20, les programmes selon la présente invention sont transférés dans la mémoire vive 203 qui contient alors le code exécutable de l'invention ainsi que les données nécessaires à la mise en oeuvre de l'invention.

Le dispositif 20 est apte à lire une séquence d'images vidéo reçue de l'interface de communication 206 et à coder celle-ci sous la forme d'un flux de données échelonnables conformément à la présente invention.

Le dispositif 20 est apte à lire un flux de données échelonnables reçu de l'interface de communication 206 ou lu d'un disque DVD par l'intermédiaire du lecteur DVD 209 et à décoder celui-ci sous la forme d'une séquence d'images vidéo conformément à la présente invention.

La Fig. 3 représente l'algorithme de sélection adaptée de coefficients obtenus par décomposition en ondelettes discrète selon l'invention.

Le processeur 200 du dispositif de codage et/ou de décodage 20 effectue un filtrage temporel et une décomposition en sous-bandes de fréquence selon la technique connue sous le terme de "lifting".

A l'étape E300, le processeur 200 du dispositif 20 calcule, pour chaque image de la séquence d'images vidéo, une estimation de mouvement entre une image et ses images voisines. Cette estimation de mouvement est par exemple une estimation de mouvement par mise en correspondance de blocs d'une image vers chacune des images voisines. Le processeur effectue une estimation de mouvement de la même manière que celle effectuée par le module d'estimation de 11 du codeur décrit en Fig. 1.

A l'étape suivante E301, le processeur 200 effectue un filtrage temporel compensé en mouvement. Le processeur 200 effectue une décomposition en ondelettes discrète entre les images de la séquence d'images pour décomposer la séquence d'images vidéo en plusieurs sous-bandes temporelles, réparties sur un ou plusieurs niveaux de résolution. Le processeur 200 effectue le filtrage temporel compensé en mouvement de la même manière que celui effectué par le module de filtrage temporel compensé en mouvement 13 de la Fig. 1.

A l'étape suivante E302, le processeur 200 effectue une décomposition spatiale des sous-bandes temporelles obtenues à l'étape E301 pour former des sous-bandes de basse fréquence et de haute fréquence. La décomposition spatiale est effectuée de la même manière que celle effectuée par le module de décomposition en ondelettes discrète 14 de la Fig. 1.

A l'étape suivante E303, le processeur 200 associe chaque bloc défini par le module de prédiction de mouvement à quatre triangles de la même manière que celle effectuée par le module de calcul de pseudo résolution 12 du codeur 10 de la Fig. 1.

A l'étape suivante E304, le processeur 200 détermine un facteur $\rho_t$ d'expansion pour chaque triangle de la même manière que celle effectuée par le module de calcul de pseudo résolution 12 du codeur 10 de la Fig. 1.

A l'étape suivante E305, le processeur 200 détermine le facteur d'expansion $\rho$ du bloc en cours de traitement à partir des facteurs d'expansion des triangles associés au bloc de la même manière que celle effectuée par le module de calcul de pseudo résolution 12 du codeur 10 de la Fig. 1.

A l'étape suivante E306, le processeur 200 calcule la pseudo résolution notée PR de chaque bloc de l'image en cours de traitement à partir des facteurs d'expansion $\rho$ déterminés à l'étape E305. Le calcul de la pseudo résolution notée PR est effectué de la même manière que celui effectué par le module de calcul de pseudo résolution 12 de la Fig. 1.

Le processeur 200 effectue les étapes E303 à E306 pour chaque bloc de l'image en cours de traitement, pour chaque niveau de décomposition temporelle et pour chaque image temporelle.

A l'étape suivante E307, le processeur 200 lit les sous-bandes de fréquence haute décomposées à l'étape E302 et associe à l'étape E308, à chaque coefficient c de chaque sous-bande spatiale de haute fréquence, la pseudo résolution pr(c) du bloc correspondant spatialement aux coordonnées spatiales du coefficient.

A l'étape suivante E309, le processeur 200 calcule, pour chaque coefficient de chaque sous-bande de haute fréquence, la résolution spatiale effective notée rse(c) de chaque coefficient c en divisant la résolution spatiale du coefficient par la pseudo résolution du coefficient.

A l'étape suivante E310, le processeur 200 détermine, parmi les coefficients de sous-bandes de haute fréquence, les coefficients des sous-bandes de haute fréquence qui doivent être insérés dans le flux de données échelonnables. Le processeur 200 insère, dans un niveau de restitution, les coefficients de haute fréquence d'autres sous-bandcs de fréquence haute que celles classiquement comprises dans le niveau de restitution de la même manière que celle effectuée par le module de décision 17 de la Fig. 1.

A l'étape suivante E311, le processeur 200 affecte un facteur de pondération f(c) à chaque coefficient c. Ce facteur de pondération f(c) permet de pondérer la distorsion de chaque coefficient c. Le facteur de pondération f(c) affecté à chaque coefficient c est identique à celui décrit en référence à la Fig. 1. Il ne sera pas plus décrit.

A l'étape E312, le processeur 200 procède au codage entropique du niveau de restitution courant pour former un flux de données échelonnables 18 à partir des coefficients des différentes sous-bandes de fréquence correspondant au niveau de restitution souhaité, des coefficients déterminés à l'étape E310 et des champs de mouvement estimés à l'étape E300.

A l'étape E313, le processeur 200 vérifie si un autre niveau de restitution du flux de données échelonnables 18 doit être codé ou non. Dans l'affirmative, le processeur 200 réitère la boucle constituée des étapes E310 à E313 tant que tous les niveaux de résolution n'ont pas étés traités. Dans la négative, le processeur 200 arrête le présent algorithme.

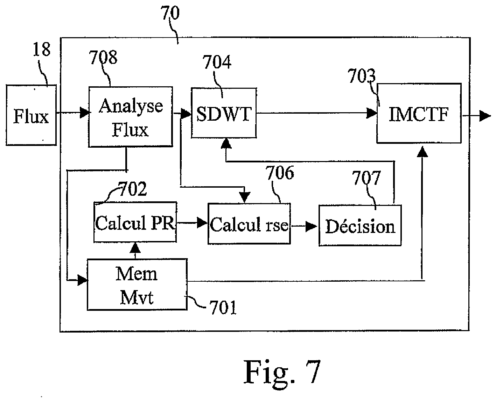

La Fig. 7 représente un schéma bloc d'un décodeur vidéo à filtrage temporel compensé en mouvement et décomposition en ondelettes discrète selon l'invention.

Le décodeur vidéo à filtrage temporel compensé en mouvement et décomposition en ondelettes discrète 70 est apte à lire un flux de données échelonnables 18 et à décoder celui-ci sous la forme d'une séquence d'images vidéo 15 conformément à la présente invention.

Le décodeur vidéo à filtrage temporel compensé en mouvement et décomposition en ondelettes discrète 70 ou décodeur 70 comporte un module d'analyse de flux 708. Le module d'analyse de flux 708 effectue un décodage entropique du flux de données échelonnables 18 et extrait du flux de données échelonnables ainsi décodé les différents champs de mouvement compris dans le flux de données échelonnables 18 pour les transférer au module de calcul de pseudo résolution 702 et au module de mémorisation de champ de mouvement 701. Le module d'analyse de flux 708 extrait du flux de données échelonnables décodé les coefficients des différentes sous-bandes de fréquence compris dans le flux de données échelonnables ainsi que les coefficients qui ont été insérés par le codeur 10 au niveau de restitution courant conformément à la présente invention. Le module d'analyse de flux 708 transfère les coefficients extraits au module de synthèse 704. Il est à remarquer ici que dans une variante de réalisation, le module d'analyse de flux 708 extrait aussi les résolutions spatiales effectives associées à chaque coefficient et insérées par le codeur 10 au niveau de restitution courant conformément à la présente invention et les transfère au module de décision 707.

Le module de calcul de pseudo résolution 702 associe à chaque bloc de l'image en cours de traitement quatre triangles de la même manière que celle effectuée par le module de calcul de pseudo résolution 12 de la Fig. 1. A partir du champ de mouvement composé pour chaque bloc d'une image d'un vecteur mouvement entre l'image en cours de traitement et son image voisine précédente et d'un vecteur mouvement entre l'image et son image voisine suivante, le module de calcul de pseudo résolution 12 est apte à déterminer les positions des sommets des triangles dans l'image courante et dans les images voisines et calcule, de la même manière que le module de pseudo résolution 12 du codeur 10, le facteur d'expansion $\rho_t$ de chaque triangle. Le module de calcul de pseudo résolution 702 calcule le facteur d'expansion $\rho$ de chaque bloc de la même manière que le module de pseudo résolution 12 du codeur 10.

Le module de calcul de pseudo résolution 702 détermine à partir du facteur d'expansion $\rho$ d'un bloc la pseudo résolution PR du bloc de la même manière que le module de pseudo résolution 12 du codeur 10.

Le décodeur 70 comporte aussi un module de calcul de résolution spatiale effective 706. Le module de calcul de résolution spatiale effective 706 détermine, pour chaque coefficient c de chaque sous-bande spatiale de haute fréquence reçue du module d'analyse de flux 708, une résolution spatiale effective notée rse(c). Le module de calcul de résolution spatiale effective 706 associe à chaque coefficient la pseudo résolution du bloc correspondant spatialement aux coordonnées du coefficient. Le calcul résolution spatiale effective est identique au calcul effectué par le module de résolution spatiale effective 16 du codeur 10 de la Fig. 1. Les résolutions spatiales effectives de chaque coefficient sont transférées par le module de calcul de résolution spatiale effective 706 au module de décision 707.

Le décodeur 70 effectue le calcul de facteur d'expansion, de pseudo résolution et de pseudo résolution effective pour chaque bloc de l'image en cours de traitement, pour chaque niveau de décomposition temporelle et pour chaque image temporelle.

Le module de décision 707, à partir de la résolution spatiale effective calculée pour chaque coefficient et de la résolution de restitution du flux de données échelonnables 18 en cours de traitement, détermine quels coefficients de haute fréquence doivent être synthétisés par le module de synthèse en ondelettes discrète 704. Pour cela, le module de décision 707 compare, pour chaque coefficient de chaque sous-bande, la résolution spatiale effective du coefficient avec la résolution spatiale du niveau de restitution en cours de traitement. Si la résolution spatiale effective du coefficient est supérieure à la résolution spatiale du niveau de restitution, le coefficient n'est pas transféré au module de synthèse en ondelettes discrète 704. Si, au contraire, la résolution spatiale effective du coefficient est inférieure ou égale à la résolution spatiale du niveau de restitution, le coefficient est transféré au module de synthèse en ondelettes discrète 704.

Ainsi, selon l'exemple de la Fig. 6, lorsque le niveau de restitution est le niveau N, soit de résolution un quart, les coefficients compris dans les zones notées 622a, 622b, 622c, 625a, 625b, 625c, 615a, 615b et 615c sont transférés par le module de décision 707 au module de synthèse en ondelettes discrète 704.

Le module de synthèse en ondelettes discrète 704 synthétise les différentes sous-bandes de fréquences transmises par le module d'analyse de flux 708 ainsi que les coefficients transmis par le module de décision 707.

Selon l'exemple de la Fig. 6 et lorsque le niveau de restitution est le niveau N, le module de synthèse en ondelettes discrète 704 synthétise la sous-bande de fréquence T-LLs-LLLL reçue du module d'analyse de flux 708 avec une sous-bande de fréquence haute comprenant les coefficients compris dans les zones 622a et 625a et d'autres coefficients mis à zéro, une sous-bande de fréquence haute comprenant les coefficients compris dans les zones 622b et 625b et d'autres coefficients mis à zéro et une sous-bande de fréquence haute comprenant les coefficients compris dans les zones 622c et 625c et d'autres coefficients mis à zéro, pour former une sous-bande de fréquence équivalente à la sous-bande 630.

Le module de synthèse en ondelettes discrète 704 synthétise la sous-bande précédemment formée avec une sous-bande de fréquence haute comprenant les coefficients compris dans la zone 615a et d'autres coefficients mis à zéro, une sous-bande de fréquence haute comprenant les coefficients compris dans la zone 615b et d'autres coefficients mis à zéro et une sous-bande de fréquence haute comprenant les coefficients compris dans la zone 615c et d'autres coefficients mis à zéro, pour former une sous-bande temporelle sur-résolue, c'est-à-dire une sous-bande de résolution spatiale supérieure à la résolution spatiale demandée.

Préférentiellement, ces sous-bandes temporelles sur-résolues sont transférées au module de filtrage temporel inverse compensé en mouvement 703. Le module de filtrage temporel inverse compensé en mouvement 703 effectue un filtrage temporel selon la technique de "lifting" de manière à reconstruire les différentes images de la séquence d'images vidéo codée par le codeur de la présente invention. Le module de filtrage temporel inverse compensé en mouvement 703 forme une séquence d'images vidéo à partir des sous-bandes temporelles de haute fréquence, des sous-bandes temporelles de basse fréquence et des estimations de mouvement mémorisées dans le module de mémorisation 701.

En variante, les sous-bandes temporelles sur-résolues sont, préalablement à leur transfert au module de filtrage temporel inverse compensé en mouvement 703, sous-échantillonnées de manière à ce que celles-ci aient la même résolution spatiale que la résolution spatiale demandée. Les hautes fréquences spatiales insérées sont alors réintégrées dans les images lors du sur-échantillonnage réalisé au niveau du décodeur.

La séquence d'images vidéo ainsi formée est ensuite transférée pour une visualisation de celle-ci.

Il est à remarquer ici que dans une variante de réalisation, lorsque les différentes valeurs de résolution spatiale effective sont transmises dans le flux de données échelonnables, le décodeur 70 peut ne pas disposer de module de calcul de pseudo résolution 702 et de module de calcul de résolution spatiale effective 706.

La Fig. 8 représente l'algorithme de décodage d'une flux de données codées selon l'invention selon un premier mode de réalisation de l'invention.

Le processeur 200 du dispositif de codage et/ou de décodage 20 effectue un filtrage temporel inverse et une synthèse d'ondelettes discrète selon la technique connue sous le terme de "lifting".

Le processeur 200 est apte à lire un flux de données échelonnables 18 préalablement codé selon la présente invention et à décoder celui-ci sous la forme d'une séquence d'images vidéo conformément à la présente invention.

A l'étape E800, le processeur 200 détermine la résolution spatiale du niveau de restitution et effectue un décodage entropique du flux de données échelonnables 18.

A l'étape E801, le processeur 200 extrait du flux de données échelonnables ainsi décodé les coefficients des différentes sous-bandes de fréquence basse compris dans le flux de données échelonnables.

A l'étape E802, le processeur 200 extrait du flux de données échelonnables ainsi décodé, les coefficients des différentes sous-bandes de haute fréquence compris dans le flux de données échelonnables ainsi que les coefficients qui ont été insérés par le codeur 10 au niveau de restitution courant conformément à la présente invention.

A l'étape E803, le processeur 200 extrait du flux de données échelonnables ainsi décodé les différents champs de mouvement compris dans le flux de données.

Il est à remarquer ici que dans une variante de réalisation, le module d'analyse de flux 708 extrait aussi les résolutions spatiales effectives associées à chaque coefficient insérées par le codeur 10 au niveau de restitution courant conformément à la présente invention.

A l'étape E804, le processeur 200 calcule pour chaque coefficient des sous-bandes de fréquence haute, la valeur de la résolution spatiale effective du coefficient. Le calcul de la résolution spatiale effective du coefficient est effectué de la même manière que celui effectué par le module de calcul de pseudo résolution 702 et le module de calcul de résolution spatiale effective 706.

A l'étape E805, le processeur 200 effectue une pré-sélection des coefficients de haute fréquence. Cette pré-sélection consiste à déterminer les coefficients de haute fréquence qui doivent être synthétisés par synthèse en ondelettes discrète. Pour cela le processeur 200 compare, pour chaque coefficient de chaque sous-bande, la résolution spatiale effective du coefficient avec la résolution spatiale du niveau de restitution en cours de traitement. Si la résolution spatiale effective du coefficient est supérieure à la résolution spatiale du niveau de restitution, le coefficient n'est pas retenu pour être synthétisé. Si au contraire la résolution spatiale effective du coefficient est inférieure ou égale à la résolution spatiale du niveau de restitution, le coefficient est pré-sélectionné pour être synthétisé.

A l'étape E806, le processeur 200 sélectionne parmi les coefficients présélectionnés ceux qui vont être synthétisés. Cette sélection est par exemple effectuée en fonction des caractéristiques du dispositif 20.

A l'étape E807, le processeur 200 effectue une synthèse en ondelettes discrète et synthétise les différentes sous-bandes de fréquence lues aux étapes E801 et E802 ainsi que les coefficients sélectionnés à l'étape E806. La synthèse en ondelettes discrète est identique à celle décrite pour le module de synthèse en ondelettes discrète 704 du décodeur 70. A l'issue de la synthèse en ondelettes discrète, des sous-bandes temporelles sur-résolues sont formées.

Selon un mode préféré, à l'étape suivante E808, le processeur 200 effectue un filtrage temporel inverse compensé en mouvement. Le processeur 200 effectue un filtrage temporel selon la technique de "lifting" de manière à reconstruire les différentes images de la séquence d'images vidéo codée par le codeur de la présente invention. Le processeur 200 forme, à partir des sous-bandes temporelles de haute fréquence sur-résolues, des sous-bandes temporelles de basse fréquence et des estimations de mouvement lues à l'étape E803, une séquence d'images vidéo.

En variante, les sous-bandes temporelles sur-résolues sont, préalablement à l'étape E808, sous-échantillonnées de manière à ce que celles-ci aient la même résolution spatiale que la résolution spatiale demandée. Les hautes fréquences spatiales insérées sont alors réintégrées dans les images lors du sur-échantillonnage réalisé au niveau du décodeur.

La séquence d'images vidéo ainsi formée est ensuite transférée pour une visualisation de celle-ci.

Dans une variante de réalisation, le codeur de la présente invention ne traite pas une séquence d'images vidéo mais traite un ensemble de données représentatif de la séquence d'images vidéo. L'ensemble de données comprend les coefficients des sous-bandes de fréquence de différentes résolutions spatiales. Le codeur détermine, de la même manière que celle décrite précédemment, la résolution spatiale effective de chaque coefficient compris dans l'ensemble de données. Le codeur forme une pluralité de flux de données. Chaque flux de données est constitué d'un niveau de restitution comprenant des coefficients de sous-bandes de fréquence dont la résolution spatiale est égale à une résolution spatiale du niveau de restitution et des coefficients de sous-bandes de fréquence de résolution spatiale supérieure à la ou aux résolutions spatiales du niveau de restitution.

Le codeur insère dans au moins un niveau de résolution, les coefficients dont la résolution spatiale effective est inférieure à la résolution spatiale du niveau de résolution.

**Revendications**

1. Procédé de codage d'une séquence d'images vidéo en coefficients de sous-bandes de fréquence de différentes résolutions spatiales, le procédé de codage formant au moins un flux de données constitué d'au moins un niveau de restitution comprenant des coefficients de sous-bandes de fréquence dont la résolution spatiale est égale à une résolution spatiale du niveau de restitution, **caractérisé en ce que** le procédé comporte l'étape d'insertion dans au moins un niveau de restitution, de coefficients de sous-bandes de fréquence de résolution spatiale supérieure à la ou aux résolutions spatiales du niveau de restitution.

2. Procédé selon la revendication 1, **caractérisé en ce que**, préalablement à l'étape d'insertion dans un niveau de restitution, de coefficients de sous-bandes de fréquence de résolution supérieure à la ou aux résolutions spatiales du niveau de restitution, le procédé comporte les étapes de :

- obtention d'une résolution spatiale effective pour chaque coefficient de sous-bande de fréquence,
- comparaison de chaque résolution spatiale effective avec la ou aux résolutions spatiales du niveau de restitution,

et **en ce que** les coefficients de sous-bande de fréquence insérés dans le niveau de restitution sont des coefficients dont la résolution spatiale effective est inférieure à la ou aux résolutions spatiales du niveau de restitution.

3. Procédé selon la revendication 2, **caractérisé en ce que** l'étape d'obtention de la résolution spatiale effective d'un coefficient se décompose en étapes de :

- détermination d'une pseudo résolution pour chaque coefficient de sous-bande de fréquence,
- division de la résolution spatiale de la sous-bande à laquelle appartient un coefficient par la pseudo résolution du coefficient.

4. Procédé selon la revendication 3, **caractérisé en ce que** l'étape de détermination, pour chaque coefficient de la pseudo résolution, se décompose en étapes de :

- estimation d'un champ de mouvement entre chaque image et au moins une image voisine de l'image de la séquence d'images vidéo,
- détermination, pour chaque bloc de chaque image de la séquence d'images vidéo, d'au moins un facteur d'expansion entre le bloc de l'image et le bloc correspondant dans au moins une image voisine,
- mise de la pseudo résolution d'un bloc à la valeur un si le facteur d'expansion du bloc est égal à un,
- mise de la pseudo résolution d'un bloc à la valeur maximale des valeurs suivantes : la valeur un, la valeur du facteur d'expansion entre le bloc de l'image et le bloc correspondant dans au moins une image voisine.

5. Procédé selon la revendication 4, **caractérisé en ce que** l'étape de détermination du facteur d'expansion d'un bloc se décompose en étapes de :

- association du bloc à une pluralité de triangles,
- détermination, pour chaque triangle, d'une transformation affine entre les sommets du triangle dans le bloc et les sommets du triangle correspondant dans l'image voisine à partir du champ de mouvement,
- détermination, pour chaque triangle, du facteur d'expansion du triangle en calculant le déterminant de la transformation affine du triangle,

- détermination du facteur d'expansion du bloc à partir des facteurs d'expansion des triangles associés au bloc.

6. Procédé selon l'une quelconque des revendications 1 à 5, **caractérisé en ce que** le codage de la séquence d'images vidéo en coefficients de sous-bandes de différentes résolutions spatiales est effectué par filtrage temporel et décomposition en ondelettes discrète et **en ce que** le flux de données est un flux de données échelonnables constitué d'une pluralité de niveaux de restitution.

7. Procédé selon l'une quelconque des revendications 1 à 5, **caractérisé en ce que** la séquence d'images vidéo a préalablement été codée dans un ensemble de données comprenant les coefficients des sous-bandes de fréquence de différentes résolutions spatiales et **en ce que** le procédé forme une pluralité de flux de données constitués d'un niveau de restitution et comprenant des coefficients de sous-bandes de fréquence dont la résolution spatiale est égale à une résolution spatiale du niveau de restitution ainsi que des coefficients de sous-bandes de fréquence de résolution spatiale supérieure à la ou aux résolutions spatiales du niveau de restitution.

8. Procédé selon l'une quelconque des revendications 2 à 7, **caractérisé en ce que** le procédé comporte en outre une étape d'insertion dans le flux de données de la résolution spatiale effective de chaque coefficient de sous-bande de fréquence inséré dans un niveau de restitution.

9. Procédé de décodage d'un flux de données obtenu par filtrage temporel et décomposition en ondelettes discrète, le flux de données étant constitué d'au moins un niveau de restitution comprenant des coefficients de sous-bandes de fréquence dont la résolution spatiale est égale à une résolution spatiale du niveau de restitution, **caractérisé en ce que** le procédé comporte les étapes de :

    - obtention, dans au moins un niveau de restitution, de coefficients de sous-bandes de fréquence de résolution spatiale supérieure à la ou aux résolutions spatiales du niveau de restitution,
    - synthèse des coefficients de sous-bandes de fréquence dont la résolution spatiale est égale à une résolution spatiale du niveau de restitution et des coefficients de sous-bandes de fréquence de résolution spatiale supérieure à la ou aux résolutions spatiales du niveau de restitution.

10. Procédé selon la revendication 9, **caractérisé en ce que**, préalablement à l'étape de synthèse des coefficients de sous-bandes de fréquence de résolution supérieure à la ou aux résolutions spatiales du niveau de restitution, le procédé comporte les étapes de :

    - obtention d'une résolution spatiale effective pour chaque coefficient de sous-bande de fréquence,
    - comparaison de chaque résolution spatiale effective avec la ou les résolutions spatiales du niveau de restitution,

    et **en ce que** les coefficients de sous-bande de fréquence synthétisés sont des coefficients dont la résolution spatiale effective est inférieure à la ou aux résolutions spatiale du niveau de restitution.

11. Procédé selon la revendication 10, **caractérisé en ce que** la résolution spatiale effective de chaque coefficient de sous-bande de fréquence est obtenue en lisant celle-ci dans le flux de données.

12. Procédé selon la revendication 10, **caractérisé en ce que** l'étape d'obtention de la résolution spatiale effective d'un coefficient se décompose en étapes de:

    - détermination d'une pseudo résolution pour chaque coefficient de sous-bande de fréquence,
    - division de la résolution spatiale de la sous-bande à laquelle appartient un coefficient par la pseudo résolution du coefficient.

13. Procédé selon la revendication 12, **caractérisé en ce que** l'étape de détermination, pour chaque coefficient, de la pseudo résolution se décompose en étapes de :

    - lecture dans le flux de données du champ de mouvement entre chaque image et au moins une image voisine de l'image de la séquence d'images vidéo,
    - détermination, pour chaque bloc de chaque image de la séquence d'images vidéo, d'au moins un facteur d'expansion entre le bloc et le bloc correspondant dans au moins une image voisine,
    - mise de la pseudo résolution d'un bloc à la valeur un si le facteur d'expansion du bloc est égal à un,
    - mise de la pseudo résolution d'un bloc à la valeur maximale des valeurs suivantes : la valeur un, la valeur du facteur d'expansion entre le bloc de l'image et le bloc correspondant dans au moins une image voisine.

14. Procédé selon la revendication 13, **caractérisé en ce que** l'étape de détermination du facteur d'expansion d'un bloc se décompose en étapes de :

- association du bloc à une pluralité de triangles,
- détermination, pour chaque triangle, d'une transformation affine entre les sommets du triangle dans le bloc et les sommets du triangle correspondant dans l'image voisine à partir du champ de mouvement,
- détermination, pour chaque triangle, du facteur d'expansion du triangle en calculant le déterminant de la transformation affine du triangle,
- détermination du facteur d'expansion du bloc à partir des facteurs d'expansion des triangles associés au bloc.

15. Dispositif de codage d'une séquence d'images vidéo en coefficients de sous-bandes de fréquence de différentes résolutions spatiales, le dispositif de codage formant au moins un flux de données constitué d'au moins un niveau de restitution comprenant des coefficients de sous-bandes de fréquence dont la résolution spatiale est égale à une résolution spatiale du niveau de restitution, **caractérisé en ce que** le dispositif comporte des moyens d'insertion dans au moins un niveau de restitution de coefficients de sous-bandes de fréquence de résolution spatiale supérieure à la ou aux résolutions spatiales du niveau de restitution.

16. Dispositif de décodage d'un flux de données obtenu par filtrage temporel et décomposition en ondelettes discrète, le flux de données étant constitué d'au moins un niveau de restitution comprenant des coefficients de sous-bandes de fréquence dont la résolution spatiale est égale à une résolution spatiale du niveau de restitution, **caractérisé en ce que** le dispositif comporte :

   - des moyens d'obtention, dans au moins un niveau de restitution, de coefficients de sous-bandes de fréquence de résolution spatiale supérieure à la ou aux résolutions spatiales du niveau de restitution,
   - des moyens de synthèse des coefficients de sous-bandes de fréquence dont la résolution spatiale est égale à une résolution spatiale du niveau de restitution et des coefficients de sous-bandes de fréquence de résolution spatiale supérieure à la ou aux résolutions spatiales du niveau de restitution.

17. Programme d'ordinateur stocké sur un support d'informations, ledit programme comportant des instructions permettant de mettre en œuvre le procédé selon l'une quelconque des revendications 1 à 8, lorsqu'il est chargé et exécuté par un système informatique.

18. Programme d'ordinateur stocké sur un support d'informations, ledit programme comportant des instructions permettant de mettre en œuvre le procédé selon l'une quelconque des revendications 9 à 14, lorsqu'il est chargé et exécuté par un système informatique.

19. Signal comprenant une séquence d'images vidéo codée en coefficients de sous-bandes de fréquence de différentes résolutions spatiales, le signal formant au moins un flux de données constitué d'au moins un niveau de restitution comprenant des coefficients de sous-bandes de fréquence dont la résolution spatiale est égale à une résolution spatiale du niveau de restitution, **caractérisé en ce que** le signal comporte dans au moins un niveau de restitution, des coefficients de sous-bandes de fréquence de résolution spatiale supérieure à la ou aux résolutions spatiales du niveau de restitution.

**Patentansprüche**

1. Verfahren zur Codierung einer Videobildsequenz in Frequenzsubbandkoeffizienten mit verschiedenen räumlichen Auflösungen, wobei das Codierungsverfahren mindestens einen Datenstrom bildet, der aus mindestens einem Wiedergabeniveau besteht, das Frequenzsubbandkoeffizienten umfasst, deren räumliche Auflösung gleich einer räumlichen Auflösung des Wiedergabeniveaus ist, **dadurch gekennzeichnet, dass** das Verfahren den Schritt des Einfügens, in mindestens ein Wiedergabeniveau, von Frequenzsubbandkoeffizienten mit einer räumlichen Auflösung beinhaltet, die höher als die räumliche(n) Auflösung(en) des Wiedergabeniveaus ist.

2. Verfahren nach Anspruch 1, **dadurch gekennzeichnet, dass** das Verfahren vor dem Schritt des Einfügens in ein Wiedergabeniveau von Frequenzsubbandkoeffizienten mit einer Auflösung, die höher als die räumliche(n) Auflösung(en) des Wiedergabeniveaus ist, die folgenden Schritte beinhaltet:

   - Erhalten einer effektiven räumlichen Auflösung für jeden Frequenzsubbandkoeffizienten,
   - Vergleichen jeder effektiven räumlichen Auflösung mit der oder den räumlichen Auflösungen des Wiedergabeniveaus,

   und dass die in das Wiedergabeniveau eingefügten Frequenzsubbandkoeffizienten Koeffizienten sind, deren effektive räumliche Auflösung geringer als die räumliche(n) Auflösung(en) des Wiedergabeniveaus sind.

3. Verfahren nach Anspruch 2, **dadurch gekennzeichnet, dass** sich der Schritt des Erhaltens der effektiven räumlichen Auflösung eines Koeffizienten in die folgenden Schritte gliedert:

- Bestimmen einer Pseudoauflösung für jeden Frequenzsubbandkoeffizienten,
- Dividieren der räumlichen Auflösung des Subbandes, dem ein Koeffizient angehört, durch die Pseudoauflösung des Koeffizienten.

4. Verfahren nach Anspruch 3, **dadurch gekennzeichnet, dass** sich der Schritt des Bestimmens für jeden Koeffizienten der Pseudoauflösung in die folgenden Schritte gliedert:

- Schätzen eines Bewegungsfeldes zwischen jedem Bild und mindestens einem Nachbarbild des Bildes der Videobildsequenz,
- Bestimmen, für jeden Block jedes Bildes der Videobildsequenz, mindestens eines Expansionsfaktors zwischen dem Block des Bildes und dem entsprechenden Block in mindestens einem Nachbarbild,
- Setzen der Pseudoauflösung eines Blocks auf den Wert eins, wenn der Expansionsfaktor des Blocks gleich eins ist,
- Setzen der Pseudoauflösung eines Blocks auf den Höchstwert der folgenden Werte: der Wert eins, der Wert des Expansionsfaktors zwischen dem Block des Bildes und dem entsprechenden Block in mindestens einem Nachbarbild.

5. Verfahren nach Anspruch 4, **dadurch gekennzeichnet, dass** sich der Schritt des Bestimmens des Expansionsfaktors eines Blocks in die folgenden Schritte gliedert:

- Zuordnen des Blocks zu einer Mehrzahl von Dreiecken,
- Bestimmen, für jedes Dreieck, einer affinen Transformation zwischen den Eckpunkten des Dreiecks in dem Block und den Eckpunkten des entsprechenden Dreiecks in dem Nachbarbild anhand des Bewegungsfeldes,
- Bestimmen, für jedes Dreieck, des Expansionsfaktors des Dreiecks durch Berechnen der Determinante der affinen Transformation des Dreiecks,
- Bestimmen des Expansionsfaktors des Blocks anhand der Expansionsfaktoren der dem Block zugeordneten Dreiecke.

6. Verfahren nach einem der Ansprüche 1 bis 5, **dadurch gekennzeichnet, dass** die Codierung der Videobildsequenz in Subbandkoeffizienten mit verschiedenen räumlichen Auflösungen durch zeitliche Filterung und diskrete Wavelet-Transformation erfolgt und dass der Datenstrom ein Strom skalierbarer Daten ist, der aus einer Mehrzahl von Wiedergabeniveaus besteht.

7. Verfahren nach einem der Ansprüche 1 bis 5, **da-**

**durch gekennzeichnet, dass** die Videobildsequenz zuvor in einen Datensatz codiert wurde, der die Frequenzsubbandkoeffizienten mit verschiedenen räumlichen Auflösungen umfasst, und dass das Verfahren eine Mehrzahl von Datenströmen bildet, die aus einem Wiedergabeniveau bestehen und Frequenzsubbandkoeffizienten umfassen, deren räumliche Auflösung gleich einer räumlichen Auflösung des Wiedergabeniveaus ist, sowie Frequenzsubbandkoeffizienten mit einer räumlichen Auflösung, die höher als die räumliche(n) Auflösung(en) des Wiedergabeniveaus ist.

8. Verfahren nach einem der Ansprüche 2 bis 7, **dadurch gekennzeichnet, dass** das Verfahren ferner einen Schritt des Einfügens der effektiven räumlichen Auflösung jedes in ein Wiedergabeniveau eingefügten Frequenzsubbandkoeffizienten in den Datenstrom beinhaltet.

9. Verfahren zur Decodierung eines Datenstroms, der durch zeitliche Filterung und diskrete Wavelet-Transformation erhalten wurde, wobei der Datenstrom aus mindestens einem Wiedergabeniveau besteht, das Frequenzsubbandkoeffizienten umfasst, deren räumliche Auflösung gleich einer räumlichen Auflösung des Wiedergabeniveaus ist, **dadurch gekennzeichnet, dass** das Verfahren die folgenden Schritte beinhaltet:

- Erhalten von Frequenzsubbandkoeffizienten mit einer räumlichen Auflösung, die höher als die räumliche(n) Auflösung(en) des Wiedergabeniveaus ist, in mindestens einem Wiedergabeniveau,
- Synthetisieren der Frequenzsubbandkoeffizienten, deren räumliche Auflösung gleich einer räumlichen Auflösung des Wiedergabeniveaus ist, und der Frequenzsubbandkoeffizienten mit einer räumlichen Auflösung, die höher als die räumliche(n) Auflösung(en) des Wiedergabeniveaus ist.

10. Verfahren nach Anspruch 9, **dadurch gekennzeichnet, dass** das Verfahren vor dem Schritt des Synthetisierens der Frequenzsubbandkoeffizienten mit einer Auflösung, die höher als die räumliche(n) Auflösung(en) des Wiedergabeniveaus ist, die folgenden Schritte beinhaltet:

- Erhalten einer effektiven räumlichen Auflösung für jeden Frequenzsubbandkoeffizienten,
- Vergleichen jeder effektiven räumlichen Auflösung mit der oder den räumlichen Auflösungen des Wiedergabeniveaus,

und dass die synthetisierten Frequenzsubbandkoeffizienten Koeffizienten sind, deren effektive räumliche Auflösung geringer als die räumliche(n) Auflösung(en) des Wiedergabeniveaus sind.

11. Verfahren nach Anspruch 10, **dadurch gekennzeichnet, dass** die effektive räumliche Auflösung jedes Frequenzsubbandkoeffizienten erhalten wird, indem diese in dem Datenstrom gelesen wird.

12. Verfahren nach Anspruch 10, **dadurch gekennzeichnet, dass** sich der Schritt des Erhaltens der effektiven räumlichen Auflösung eines Koeffizienten in die folgenden Schritte gliedert:

  - Bestimmen einer Pseudoauflösung für jeden Frequenzsubbandkoeffizienten,
  - Dividieren der räumlichen Auflösung des Subbandes, dem ein Koeffizient angehört, durch die Pseudoauflösung des Koeffizienten.

13. Verfahren nach Anspruch 12, **dadurch gekennzeichnet, dass** sich der Schritt des Bestimmens der Pseudoauflösung für jeden Koeffizienten in die folgenden Schritte gliedert:

  - Lesen, in dem Datenstrom, des Bewegungsfeldes zwischen jedem Bild und mindestens einem Nachbarbild des Bildes der Videobildsequenz,
  - Bestimmen, für jeden Block jedes Bildes der Videobildsequenz, mindestens eines Expansionsfaktors zwischen dem Block und dem entsprechenden Block in mindestens einem Nachbarbild,
  - Setzen der Pseudoauflösung eines Blocks auf den Wert eins, wenn der Expansionsfaktor des Blocks gleich eins ist,
  - Setzen der Pseudoauflösung eines Blocks auf den Höchstwert der folgenden Werte: der Wert eins, der Wert des Expansionsfaktors zwischen dem Block des Bildes und dem entsprechenden Block in mindestens einem Nachbarbild.

14. Verfahren nach Anspruch 13, **dadurch gekennzeichnet, dass** sich der Schritt des Bestimmens des Expansionsfaktors eines Blocks in die folgenden Schritte gliedert:

  - Zuordnen des Blocks zu einer Mehrzahl von Dreiecken,
  - Bestimmen, für jedes Dreieck, einer affinen Transformation zwischen den Eckpunkten des Dreiecks in dem Block und den Eckpunkten des entsprechenden Dreiecks in dem Nachbarbild anhand des Bewegungsfeldes,
  - Bestimmen, für jedes Dreieck, des Expansionsfaktors des Dreiecks durch Berechnen der Determinante der affinen Transformation des Dreiecks,

  - Bestimmen des Expansionsfaktors des Blocks anhand der Expansionsfaktoren der dem Block zugeordneten Dreiecke.

15. Vorrichtung zur Codierung einer Videobildsequenz in Frequenzsubbandkoeffizienten mit verschiedenen räumlichen Auflösungen, wobei die Codierungsvorrichtung mindestens einen Datenstrom bildet, der aus mindestens einem Wiedergabeniveau besteht, das Frequenzsubbandkoeffizienten umfasst, deren räumliche Auflösung gleich einer räumlichen Auflösung des Wiedergabeniveaus ist, **dadurch gekennzeichnet, dass** die Vorrichtung Mittel zum Einfügen in mindestens ein Wiedergabeniveau von Frequenzsubbandkoeffizienten mit einer räumlichen Auflösung, die höher als die räumliche(n) Auflösung(en) des Wiedergabeniveaus ist, beinhaltet.

16. Vorrichtung zur Decodierung eines Datenstroms, der durch zeitliche Filterung und diskrete Wavelet-Transformation erhalten wurde, wobei der Datenstrom aus mindestens einem Wiedergabeniveau besteht, das Frequenzsubbandkoeffizienten umfasst, deren räumliche Auflösung gleich einer räumlichen Auflösung des Wiedergabeniveaus ist, **dadurch gekennzeichnet, dass** die Vorrichtung beinhaltet:

  - Mittel zum Erhalten, in mindestens einem Wiedergabeniveau, von Frequenzsubbandkoeffizienten mit einer räumlichen Auflösung, die höher als die räumliche(n) Auflösung(en) des Wiedergabeniveaus ist,
  - Mittel zum Synthetisieren der Frequenzsubbandkoeffizienten, deren räumliche Auflösung gleich einer räumlichen Auflösung des Wiedergabeniveaus ist, und der Frequenzsubbandkoeffizienten mit einer räumlichen Auflösung, die höher als die räumliche(n) Auflösung(en) der Wiedergabeebene ist.

17. Computerprogramm, das auf einem Datenträger gespeichert ist, wobei das Programm Befehle beinhaltet, die das Durchführen des Verfahrens nach einem der Ansprüche 1 bis 8 ermöglichen, wenn es von einem Datenverarbeitungssystem geladen und ausgeführt wird.

18. Computerprogramm, das auf einem Datenträger gespeichert ist, wobei das Programm Befehle beinhaltet, die das Durchführen des Verfahrens nach einem der Ansprüche 9 bis 14 ermöglichen, wenn es von einem Datenverarbeitungssystem geladen und ausgeführt wird.

19. Signal, das eine Videobildsequenz umfasst, die in Frequenzsubbandkoeffizienten mit verschiedenen räumlichen Auflösungen codiert ist, wobei das Signal mindestens einen Datenstrom bildet, der aus mindestens einem Wiedergabeniveau besteht, das Frequenzsubbandkoeffizienten umfasst, deren räumliche Auflösung gleich einer räumlichen Auflösung des Wiedergabeniveaus ist, **dadurch gekennzeichnet, dass** das Signal in mindestens einem Wiedergabeniveau Frequenzsubbandkoeffizienten mit einer räumlichen Auflösung beinhaltet, die höher als die räumliche(n) Auflösung(en) des Wiedergabeniveaus ist.

**Claims**

1. Method for coding a sequence of video images into coefficients of frequency sub-bands having different spatial resolutions, the coding method forming at least one data stream consisting of at least one rendering level comprising coefficients of frequency sub-bands whose spatial resolution is equal to a spatial resolution of the rendering level, **characterized in that** the method includes the step of inserting into at least one rendering level coefficients of frequency sub-bands having a spatial resolution higher than the one or more spatial resolutions of the rendering level.

2. Method according to Claim 1, **characterized in that**, prior to the step of inserting into a rendering level coefficients of frequency sub-bands having a resolution higher than the one or more spatial resolutions of the rendering level, the method includes the steps of:

    - obtaining an effective spatial resolution for each frequency sub-band coefficient,
    - comparing each effective spatial resolution with the one or more spatial resolutions of the rendering level,

    and **in that** the frequency sub-band coefficients inserted into the rendering level are coefficients whose effective spatial resolution is lower than the one or more spatial resolutions of the rendering level.

3. Method according to Claim 2, **characterized in that** the step of obtaining the effective spatial resolution of a coefficient is broken down into steps of:

    - determining a pseudo-resolution for each frequency sub-band coefficient,
    - dividing the spatial resolution of the sub-band to which a coefficient belongs by the pseudo-resolution of the coefficient.

4. Method according to Claim 3, **characterized in that** the step of determining the pseudo-resolution for each coefficient is broken down into steps of:

    - estimating a motion field between each image and at least one image adjacent to the image from the sequence of video images,
    - determining, for each block of each image from the sequence of video images, at least one expansion factor between the block of the image and the corresponding block in at least one adjacent image,
    - setting the pseudo-resolution of a block to the value one if the expansion factor of the block is equal to one,
    - setting the pseudo-resolution of a block to the maximum value from among the following values: the value one, the value of the expansion factor between the block of the image and the corresponding block in at least one adjacent image.

5. Method according to Claim 4, **characterized in that** the step of determining the expansion factor of a block is broken down into steps of:

    - associating the block with a plurality of triangles,
    - determining, for each triangle, an affine transformation between the vertices of the triangle in the block and the vertices of the corresponding triangle in the adjacent image on the basis of the motion field,
    - determining, for each triangle, the expansion factor of the triangle by calculating the determinant of the affine transformation of the triangle,
    - determining the expansion factor of the block on the basis of the expansion factors of the triangles associated with the block.

6. Method according to any one of Claims 1 to 5, **characterized in that** the coding of the sequence of video images into coefficients of sub-bands having different spatial resolutions is performed by temporal filtering and discrete wavelet decomposition, and **in that** the data stream is a stream of scalable data which consists of a plurality of rendering levels.

7. Method according to any one of Claims 1 to 5, **characterized in that** the sequence of video images has previously been coded into a set of data comprising the coefficients of the frequency sub-bands having different spatial resolutions, and **in that** the method forms a plurality of data streams consisting of a rendering level and comprising coefficients of frequency sub-bands whose spatial resolution is equal to a spatial resolution of the rendering level and also coefficients of frequency sub-bands having a spatial resolution higher than the one or more spatial resolutions of the rendering level.

8. Method according to any one of Claims 2 to 7, **char-**

**acterized in that** the method further includes a step of inserting into the data stream the effective spatial resolution of each frequency sub-band coefficient inserted into a rendering level.

9. Method for decoding a data stream obtained by temporal filtering and discrete wavelet decomposition, the data stream consisting of at least one rendering level comprising coefficients of frequency sub-bands whose spatial resolution is equal to a spatial resolution of the rendering level, **characterized in that** the method includes the steps of:

> - obtaining, in at least one rendering level, coefficients of frequency sub-bands having a spatial resolution higher than the one or more spatial resolutions of the rendering level,
> - synthesizing the coefficients of frequency sub-bands whose spatial resolution is equal to a spatial resolution of the rendering level and the coefficients of frequency sub-bands having a spatial resolution higher than the one or more spatial resolutions of the rendering level.

10. Method according to Claim 9, **characterized in that**, prior to the step of synthesizing the coefficients of frequency sub-bands having a resolution higher than the one or more spatial resolutions of the rendering level, the method includes the steps of:

> - obtaining an effective spatial resolution for each frequency sub-band coefficient,
> - comparing each effective spatial resolution with the one or more spatial resolutions of the rendering level,

and **in that** the synthesized frequency sub-band coefficients are coefficients whose effective spatial resolution is lower than the one or more spatial resolutions of the rendering level.

11. Method according to Claim 10, **characterized in that** the effective spatial resolution of each frequency sub-band coefficient is obtained by reading said effective spatial resolution from the data stream.

12. Method according to Claim 10, **characterized in that** the step of obtaining the effective spatial resolution of a coefficient is broken down into steps of:

> - determining a pseudo-resolution for each frequency sub-band coefficient,
> - dividing the spatial resolution of the sub-band to which a coefficient belongs by the pseudo-resolution of the coefficient.

13. Method according to Claim 12, **characterized in that** the step of determining the pseudo-resolution for each coefficient is broken down into steps of:

> - reading, from the data stream, the motion field between each image and at least one image adjacent to the image from the sequence of video images,
> - determining, for each block of each image from the sequence of video images, at least one expansion factor between the block and the corresponding block in at least one adjacent image,
> - setting the pseudo-resolution of a block to the value one if the expansion factor of the block is equal to one,
> - setting the pseudo-resolution of a block to the maximum value from among the following values: the value one, the value of the expansion factor between the block of the image and the corresponding block in at least one adjacent image.

14. Method according to Claim 13, **characterized in that** the step of determining the expansion factor of a block is broken down into steps of:

> - associating the block with a plurality of triangles,
> - determining, for each triangle, an affine transformation between the vertices of the triangle in the block and the vertices of the corresponding triangle in the adjacent image on the basis of the motion field,
> - determining, for each triangle, the expansion factor of the triangle by calculating the determinant of the affine transformation of the triangle,
> - determining the expansion factor of the block on the basis of the expansion factors of the triangles associated with the block.

15. Device for coding a sequence of video images into coefficients of frequency sub-bands having different spatial resolutions, the coding device forming at least one data stream consisting of at least one rendering level comprising coefficients of frequency sub-bands whose spatial resolution is equal to a spatial resolution of the rendering level, **characterized in that** the device includes means for inserting into at least one rendering level coefficients of frequency sub-bands having a spatial resolution higher than the one or more spatial resolutions of the rendering level.

16. Device for decoding a data stream obtained by temporal filtering and discrete wavelet decomposition, the data stream consisting of at least one rendering level comprising coefficients of frequency sub-bands whose spatial resolution is equal to a spatial resolution of the rendering level, **characterized in that** the device includes:

- means for obtaining, in at least one rendering level, coefficients of frequency sub-bands having a spatial resolution higher than the one or more spatial resolutions of the rendering level,
- means for synthesizing the coefficients of frequency sub-bands whose spatial resolution is equal to a spatial resolution of the rendering level and the coefficients of frequency sub-bands having a spatial resolution higher than the one or more spatial resolutions of the rendering level.

17. Computer program stored on an information medium, said program including instructions making it possible to implement the method according to any one of Claims 1 to 8 when it is loaded and executed by a computing system.

18. Computer program stored on an information medium, said program including instructions making it possible to implement the method according to any one of Claims 9 to 14 when it is loaded and executed by a computing system.

19. Signal comprising a sequence of video images which is coded into coefficients of frequency sub-bands having different spatial resolutions, the signal forming at least one data stream consisting of at least one rendering level comprising coefficients of frequency sub-bands whose spatial resolution is equal to a spatial resolution of the rendering level, **characterized in that**, in at least one rendering level, the signal includes coefficients of frequency sub-bands having a spatial resolution higher than the one or more spatial resolutions of the rendering level.

Fig. 1

Fig. 2

E300 — Estimation mvt

E301 — Filtrage temporel

E302 — Filtrage spatio fréq

E303 — Association blocs triangles

E304 — Calcul $\rho_t$ triangles

E305 — Calcul $\rho$ blocs

E306 — Calcul PR blocs

E307 — Obtention Sous-bandes

E308 — Association Coeffs / blocs

E309 — Calcul rse(c)

E310 — Sélection coef

E311 — Affectation poids f(c)

E312 — Codage entropique

E313 — Nvelle rst ?

Fig. 3

Fig. 4

| Bloc voisin | | |
|---|---|---|
| Bloc voisin | Bloc | Bloc voisin |
| | Bloc voisin | |

## Fig. 5a

## Fig. 5b

51   54
52   53

Fig. 6

610d

625a 622a 620a

610a

630

T-LL$_S$-LL sr=1/2

T-LL$_S$-LLLL   sr=1/4
Niv N           rse=1/4

632

pr=2
rse=1/8

635

pr=4
rse=1/16

T-LL$_S$-LLLH

pr=2
rse=1/4

pr=4
rse=1/8

sr=1/2
rse=1/2

T-LL$_S$-LH
sr=1
rse=1

pr=2
rse=1/2

612a

pr=4
rse=1/4

615a

620c

622c

625c

T-LL$_S$-LLHL

pr=2
rse=1/4

pr=4
rse=1/8

sr=1/2
rse=1/2

T-LL$_S$-LLHH

pr=2
rse=1/4

pr=4
rse=1/8

sr=1/2
rse=1/2

600

625b 622b 620b

T-LL$_S$-HL
sr=1
rse=1

pr=2
rse=1/2

612c

pr=4
rse=1/4

615c

T-LL$_S$-HH
sr=1
rse=1

pr=2
rse=1/2

612b

pr=4
rse=1/4

615b

610c                610b

## Fig. 6

Fig. 7

E800 — Init RST

E801 — Lect coeff BF

E802 — Lect coeff HF

E803 — Lect champ mvt

E804 — Estimation Rse / HF

E805 — Pré-Select coeff HF

E806 — Select coeff

E807 — SDWT

E808 — IMCTF

Fig. 8

## RÉFÉRENCES CITÉES DANS LA DESCRIPTION

**Littérature non-brevet citée dans la description**

- **THAM ; RANGANATH ; KASSIM.** Highly Scalable Wavelet-based video codec for Very Low Bit-Rate Environment. *IEEE Journal on selected areas in communications,* Janvier 1998, vol. 16 (1

- **DAVID TAUBMAN.** High Performance Scalability Image Compression with EBCOT. *IEEE transactions on image proccssing,* Juillet 2000, vol. 9 (7